# EUROPÄISCHE PATENTSCHRIFT

(11) **EP 1 833 670 B1**
(45) Veröffentlichungstag und Bekanntmachung des Hinweises auf die Patenterteilung: **02.07.2014**
(21) Anmeldenummer: 05823665.4
(22) Anmeldetag: 16.11.2005
(51) Int. Cl.: B32B 27/32

(54) **THERMOFORMBARE MEHRSCHICHTFOLIEN**
THERMOFORMABLE MULTILAYER FILM
FILMS MULTICOUCHES THERMOFORMABLES

(30) Priorität: 16.11.2004 DE 102004055323; 22.11.2004 DE 102004056225
(43) Veröffentlichungstag der Anmeldung: 19.09.2007
(73) Patentinhaber: Schur Flexibles Dixie GmbH, 87437 Kempten (DE)
(72) Erfinder: FACKLER, Tobias, D-87764 Legau (DE); SCHWEITZER, Christoph, D-87634 Obergünzburg (DE); BERNIG, Walter, 87471 Durach (DE); DUJARDIN, Bernard, B-1180 Brüssel (BE)
(74) Vertreter: Kutzenberger, Helga
(86) Internationale Anmeldenummer: PCT/EP2005/056025
(87) Internationale Veröffentlichungsnummer: WO 2006/053886

(56) Entgegenhaltungen:
- EP-A- 1 072 399
- WO-A-00/15067
- WO-A-01/00716
- WO-A-01/26897

## Beschreibung

Die Erfindung betrifft eine thermoformbare Mehrschichtfolie, welche als Verpackungsmaterial geeignet ist, insbesondere zur Verpackung von Lebensmitteln.

Lebensmittelverpackungen, welche eine Schutzgasatmosphäre aufweisen, wie sogenannte "MAP-Packungen" *(modified atmosphere packaging*)*,* werden zunehmend eingesetzt, beispielsweise zur Verpackung von Frischfleisch.

Eine bekannte Verpackung dieser Art besteht aus zwei Verpackungselementen, zwischen denen das Verpackungsgut angeordnet ist. Das erste Verpackungselement ist dabei meist zu einer Mulde, d.h. zu einem schalenartigen, offenen Behälter ausgeformt, welche das Verpackungsgut aufnimmt. Solche Mulden werden gewöhnlich durch Tiefziehen geeigneter Folien geformt. Zur Verschließung der Verpackung wird die Mulde durch das zweite Verpackungselement, wie z.B. einen Deckel, abgedeckt, wodurch ein geschlossener Behälter entsteht, in dem sich das Verpackungsgut befindet. Beide Verpackungselemente sind über eine umlaufende Siegelnaht miteinander verbunden, wobei die Luft im Behälter vor dem Siegelvorgang vorzugsweise durch eine Schutzgasatmosphäre ersetzt wird. Das Material, welches das erste Verpackungselement (Mulde) bildet, muss in dem für die jeweilige Anwendung üblichen Temperaturbereich eine gewisse mechanische Festigkeit und Formbeständigkeit aufweisen, damit die Verpackung bei Transport und Lagerung für das Verpackungsgut einen ausreichenden Schutz bietet. Das Material, welches das zweite Verpackungselement (Deckel) bildet, ist gewöhnlich transparent, so dass das darunter befindliche Verpackungsgut gut sichtbar ist.

Die Anforderungen, welche an ein thermoformbares, vorzugsweise tiefziehfähiges Verpackungsmaterial gestellt werden, sind vielseitig. Einerseits muss das Verpackungsmaterial gut verarbeitbar sein, d.h. es muss mit Hilfe herkömmlicher Thermoformstationen, wie Tiefziehstationen in kurzer Zeit zuverlässig verformt werden können, andererseits muss es bereits kurze Zeit nach dem Thermoformvorgang eine ausreichende Steifigkeit ausbilden, um nach dem Verlassen der Thermoformstation die vorgegebene Form der Mulde nicht zu verlieren.

Ein Maß für die Qualität des Verpackungsmaterials ist die Breite des Verarbeitungsfensters. Das Verarbeitungsfenster ist durch die Abpackgeschwindigkeit und die Thermoformtemperatur beschrieben. Angestrebt ist eine hohe Abpackgeschwindigkeit mit einem sehr breiten Bereich der Thermoformtemperatur. Die Thermoformtemperatur ist die an der Maschine eingestellte Temperatur der Heizzonen. Durch niedrige Thermoformtemperaturen kann die Geschwindigkeit der Verpackungsmaschinen erhöht und die thermische Beanspruchung des Verpackungsmaterials reduziert werden. Wünschenswert ist auch eine hohe Wandstärke des thermogeformten Verpackungsmaterials an den kritischen Stellen, insbesondere auch in den Ecken des thermogeformten Verpackungselements.

Besondere Schwierigkeiten ergeben sich, wenn das Verpackungsmaterial transparent sein soll, damit das Verpackungsgut auch von der Unterseite der Verpackung her betrachtet und somit sein Zustand kontrolliert werden kann. In diesem Fall sollten die Verpackungsmaterialien nicht nur mit hoher Taktzähl mit einem sehr breiten Bereich der Thermoformtemperatur auf herkömmlichen Thermoformstationen verformt werden können, sondern zusätzlich sollten dabei auch die optischen Eigenschaften, d.h. insbesondere die hohe Transparenz nur möglichst geringfügig beeinträchtigt werden (bezogen auf eine konstante Materialstärke).

Ferner sollte zumindest die dem Muldeninneren zugewandte Oberfläche des Verpackungsmaterials heißsiegelbar sein, damit später nach Einbringen des Verpackungsguts die Verpackung durch Versiegeln des Deckels mit der Mulde luftdicht verschlossen werden kann. Darüber hinaus muss das verwendete Verpackungsmaterial den Toxizitätsstandards genügen, welche an Verpackungen von Lebensmitteln gestellt werden.

Im Stand der Technik sind thermoformbare, vorzugsweise tiefziehfähige Mehrschichtfolien bekannt, welche durch Coextrusion hergestellt werden. Herstellungsbedingt weisen jedoch die einzelnen Schichten im Vergleich zur Gesamtschichtdicke der Mehrschichtfolie eine gewisse Mindestschichtdicke auf. Wie man EP 1072 399 A2 entnehmen kann, bereitet es insbesondere Schwierigkeiten durch Coextrusion Mehrschichtfolien herzustellen bei denen eine einzelne Schicht eine Schichtdicke von weniger als 5%, insbesondere weniger als 3% der Gesamtschichtdicke der Mehrschichtfolie aufweist.

Dies gilt auch für die Mehrschichtfolien, die in WO 01/00716 bzw. WO 01/26897 offenbart sind.

Es sind Anlagen zur Flachfoliencoextrusion im Handel erhältlich, bei denen die Polymere für die einzelnen Schichten in einem sog. "Feedblock" zusammengeführt werden, ehe sie durch eine Flachdüse zur Mehrschichtfolie extrudiert werden. In einem derartigen Feedblock erfolgt die Festlegung der einzelnen Schichtdicken und somit das relative Verhältnis der einzelnen Schichtdicken untereinander. Die Temperaturführung im Feedblock ist jedoch eingeschränkt, so dass die Extrusionstemperatur nicht für jede einzelne Schicht individuell eingestellt werden kann. Demzufolge können Unterschiede in den rheologischen Eigenschaften der Polymere, auf welchen diese einzelnen Schichten basieren, auch nicht in beliebigem Maße durch individuelle Variation der Temperatur der einzelnen Polymere ausgeglichen werden. Als Folge sind in derartigen Anlagen dünne und homogene einzelne Schichten nicht herstellbar, wenn gleichzeitig auch vergleichsweise dicke Außenlagen extrudiert werden.

Dieser herstellungsbedingte Umstand tritt folglich insbesondere dann in Erscheinung, wenn Folien mit mehr als 5, vorzugsweise bis zu 9 einzelnen Schichten durch Coextrusion hergestellt werden, wobei es ausreichen würde, wenn nur einige Schichten eine vergleichsweise große Schichtdicke und andere Schichten minimale Schichtdicke aufweisen.

So enthalten Mehrschichtfolien häufig Schichten aus bestimmten Materialien, welche an sich zur Erfüllung ihrer Funktion innerhalb der Mehrschichtfolie in deutlich geringerer Schichtdicke vorhanden sein könnten, als es herstellungsbedingt durch Coextrusion möglich ist. Beispielsweise enthalten Mehrschichtfolien zur Verpackung von Lebensmitteln unter Schutzgasatmosphäre in der Regel eine Barriereschicht, um eine ausreichende Gas- und/oder Aromadichtigkeit der Verpackung zu gewährleisten. Um diese Funktion zu erfüllen, wären üblicherweise an sich lediglich Schichtdicken von unter 10 µm, vorzugsweise unter 5 µm erforderlich. Ist die Barriereschicht jedoch Bestandteil einer Mehrschichtfolie mit relativ großer Gesamtschichtdicke, z.B. von einigen hundert µm, so ist es durch Coextrusion mit Hilfe der vorstehend beschriebenen Anlagen zur Flachfoliencoextrusion nicht oder nur sehr schlecht möglich, die Schichtdicke dieser Barriereschichten auf das für die Erfüllung ihrer Funktion erforderliche Mindestmaß von wenigen µm einzustellen.

Stattdessen weisen die Barriereschichten in derartigen Mehrschichtfolien üblicherweise eine an sich unnötig große Schichtdicke auf, was in einer unerwünschten Flexibilitätslimitierung der Mehrschichtfolie resultiert. Darüber hinaus sind die Polymere, auf denen die Barriereschicht basiert, vergleichsweise kostenintensiv, so dass unnötig große Schichtdicken wegen des damit einhergehenden Materialverbrauchs unerwünscht sind. Die Herstellung solcher Mehrschichtfolien wird weiter erschwert, wenn die Barriereschicht zwischen zwei Polyamidschichten eingebettet werden soll.

Demzufolge sind die Eigenschaften der Mehrschichtfolien des Standes der Technik nicht optimal und sie sind insbesondere auf sog. Form-Füll-Siegel-Verpackungsmaschinen, welche mit Kontaktheizungen ausgestattet sind, nur schlecht zu verarbeiten.

Es besteht daher ein Bedarf an einem thermoformbaren, vorzugsweise tiefziehfähigen Verpackungsmaterial, welches Vorteile gegenüber den Materialien des Standes der Technik aufweist.

Der Erfindung liegt somit die Aufgabe zugrunde, ein verbessertes Verpackungsmaterial zur Verfügung zu stellen. Insbesondere sollte das Verpackungsmaterial thermoformbar und somit zur Ausbildung yon Mulden von Verpackungen für Lebensmittel geeignet sein, wobei die mechanischen Eigenschaften zumindest hohen Standards genügen sollten, um eine problemlose Verarbeitbarkeit auf herkömmlichen Verpackungsmaschinen zu gewährleisten.

Diese Aufgabe wird gelöst durch die Bereitstellung einer thermoformbaren, vorzugsweise tiefziehfähigen Mehrschichtfolie umfassend
- eine Trägerschicht (T) basierend auf einem thermoplastischen Polyolefin, thermoplastischen Olefin-Copolymerisat oder deren Mischung,
- eine Zwischenschicht (Z) basierend auf einem thermoplastischen Polyolefin, thermoplastischen Olefin-Copolymerisat oder deren Mischung,
- eine Verbindungsschicht (V),
- eine Haftvermittlerschicht (HV-1) und/oder eine Polyamidschicht (PA-1),
- eine gas- und/oder aromadichte Barriereschicht (B),
- eine Polyamidschicht (PA-2) und/oder eine Haftvermittlerschicht (HV-2), und
- eine Siegelschicht (S),
wobei die Schichtdicke der Barriereschicht (B) weniger als 3,0% der Gesamtschichtdicke der Mehrschichtfolie beträgt.

Es wurde gefunden, dass die erfindungsgemäßen Mehrschichtfolien zum Tiefziehen von Mulden von MAP-Packungen geeignet sind. Die erfindungsgemäßen thermoformbaren, vorzugsweise tiefziehfähigen Mehrschichtfolien weisen gute mechanische und optische Eigenschaften auf, welche sich durch den Tiefziehvorgang im wesentlichen nicht verschlechtern, und sind in toxikologischer Hinsicht zur Verpackung von Lebensmitteln geeignet. Die Siegel- und Barriereeigenschaften lassen sich in weiten Grenzen je nach beabsichtigter Verwendung der Mehrschichtfolie variieren, ohne dabei die ausgezeichnete Thermoformbarkeit und die optischen Eigenschaften zu beeinträchtigen. Insbesondere weisen einzelne Schichten eine ausreichend geringe Schichtdicke trotz weiteren Schichten mit relativ großer Schichtdicke auf.

In einer bevorzugten Ausführungsform der erfindungsgemäßen Mehrschichtfolien beträgt die Schichtdicke der Barriereschicht (B) weniger als 2,5%, bevorzugter weniger als 2,0%, noch bevorzugter weniger als 1,5%, noch bevorzugter weniger als 1,0%, am bevorzugtesten weniger als 0,75% und insbesondere weniger als 0,5% der Gesamtschichtdicke der Mehrschichtfolie.

Die erfindungsgemäßen Mehrschichtfolien sind thermoformbar, vorzugsweise tiefziehfähig. Der Begriff "tiefziehfähig" im Sinne der Erfindung definiert ein Material, welches unter Wärmeeinwirkung auf einer geeigneten Vorrichtung "tiefgezogen" werden kann, d.h. unter Einwirkung von Druck (und/oder Vakuum) beispielsweise zu einem offenen Behälter, vorzugsweise zu einer Mulde ausgebildet werden kann. Es handelt sich dabei um ein Material, welches thermoplastische Eigenschaften aufweist, so dass es im erwärmten Zustand verformbar ist, bei Raumtemperatur jedoch eine ausreichende Formstabilität aufweist, so dass auch nach Einbringen des Verpackungsguts im wesentlichen die durch Tiefziehen vorgegebene Form (z.B. Mulde) erhalten bleibt.

In einer bevorzugten Ausführungsform umfasst die erfindungsgemäße Mehrschichtfolie eine Haftvermittlerschicht (HV-1) und eine Haftvermittlerschicht (HV-2). In einer anderen bevorzugten Ausführungsform umfasst die erfindungsgemäße Mehrschichtfolie eine Polyamidschicht (PA-1) und eine Polyamidschicht (PA-2). Besonders bevorzugt ist sowohl eine Polyamidschicht (PA-1),als auch eine Haftvermittlerschicht (HV-1) vorhanden; ebenso ist besonders bevorzugt sowohl eine Polyamidschicht (PA-2), als auch eine Haftvermittlerschicht (HV-2) vorhanden.

In einer besonders bevorzugten Ausführungsform umfasst die erfindungsgemäße Mehrschichtfolie
- eine Trägerschicht (T),
- eine Zwischenschicht (Z),
- eine Verbindungsschicht (V),
- eine Haftvermittlerschicht (HV-1),
- eine Polyamidschicht (PA-1),
- eine Barriereschicht (B),
- eine Polyamidschicht (PA-2),
- eine Haftvermittlerschicht (HV-2), und
- eine Siegelschicht (S).

Die Abfolge der einzelnen Schichten innerhalb der Mehrschichtfolie entspricht bevorzugt der Reihenfolge ihrer Nennung in der vorstehenden Liste, d.h. (T)//(Z)//(V)//(HV-1)//(PA-1)//(B)//(PA-2)//(HV-2)//(S). Dabei markiert "//" die Grenzfläche zweier benachbarter Schichten. Es ist nicht zwingend erforderlich, dass zwei durch "//" getrennte Schichten unmittelbar aufeinanderfolgen, d.h. einander berühren - es ist auch möglich, dass weitere Schichten eingeschoben sind.

Mehrschichtfolien mit folgender Schichtabfolge sind besonders bevorzugt:
- (T)//(Z)//(V)//(HV-1)//(B)//(HV-2)//(S),
   (T)//(Z)//(V)//(PA-1)//(B)//(PA-2)//(S),
   (T)//(Z)//(V)//(HV-1)//(B)//(PA-2)//(S),
   (T)//(Z)//(V)//(PA-1)//(B)//(HV-2)//(S);
- (T)//(Z)//(V)//(HV-1)//(PA-1)//(B)//(HV-2)//(S),
   (T)//(Z)//(V)//(HV-1)//(PA-1)//(B)//(PA-2)//(S), (T)//(Z)//(V)//(HV-1)//(B)//(PA-2)//(HV-2)//(S), (T)//(Z)//(V)//(PA-1)//(B)//(PA-2)//(HV-2)//(S); und
- (T)//(Z)//(V)//(HV-1)//(PA-1)//(B)//(PA-2)//(HV-2)//(S).

In einer bevorzugten Ausführungsform weist die erfindungsgemäße Mehrschichtfolie eine Gesamtschichtdicke von zumindest 100 µm, bevorzugter von zumindest 125 µm, noch bevorzugter von zumindest 150 µm, am bevorzugtesten von zumindest 175 µm und insbesondere von zumindest 200 µm auf. Bevorzugt liegt die Gesamtschichtdicke im Bereich von 100 bis 3.000 µm, bevorzugter 125 bis 2.500 µm, noch bevorzugter 150 bis 1.500 µm, am bevorzugtesten 175 bis 1.200 µm und insbesondere 200 bis 1.100 µm. In einer bevorzugten Ausführungsform beträgt die Gesamtschichtdicke der erfindungsgemäßen Mehrschichtfolie mindestens 210 µm, 220 µm, 230 µm, 240 µm, 250 µm, 275 µm, 300 µm, 325 µm, 350 µm, 375 µm, 400 µm, 425 µm, 450 mm, 475 µm, 500 µm, 525 µm, 550 µm, 575 µm oder mindestens 600 µm.

Die Trägerschicht (T) und die Zwischenschicht (Z) der erfindungsgemäßen Mehrschichtfolie basieren gleich oder verschieden auf einem thermoplastischen Polyolefin, thermoplastischen Olefin-Copolymerisat oder deren Mischung.

Die Trägerschicht (T) basiert bevorzugt auf einem thermoplastischen Polymer, das eine Schmelztemperatur von höchstens 170°C, bevorzugter höchstens 160°C, besonders bevorzugt von 110°C bis 170°C, aufweist. Besonders bevorzugt basiert die Trägerschicht (T) auf Polyethylen, insbesondere Polyethylen mit einer Dichte von höchstens 0,92 g/cm³, Polypropylen (PP), Ethylen-Copolymerisat, insbesondere Ethylen-Vinylacetat-Copolymerisat und/oder Propylen-Copolymerisat. Besonders bevorzugt basiert die Trägerschicht (T) auf Polypropylen, einem Propylen-Copolymerisat (insbesondere einem Propylen-Random-Copolymerisat oder einem Propylen-Block-Copolymerisat) oder deren Mischung.

Die Trägerschicht (T) weist vorzugsweise eine Dicke von 100 bis 800 µm auf, bevorzugter 120 bis 700 µm, noch bevorzugter 140 bis 600 µm, am bevorzugtesten 150 bis 300 µm und insbesondere von 160 bis 275 µm.

Die Zwischenschicht (Z) basiert bevorzugt auf einem thermoplastischen Polymer, das eine Schmelztemperatur von höchstens 170°C, bevorzugter höchstens 160°C, besonders bevorzugt von 110°C bis 170°C, aufweist. Besonders bevorzugt basiert die Zwischenschicht (Z) auf Polyethylen, insbesondere Polyethylen mit einer Dichte von höchstens 0,92 g/cm³, Polypropylen (PP), Ethylen-Copolymerisat, insesondere Ethylen-Vinylacetat-Copolymerisat und/oder Propylen-Copolymerisat. Besonders bevorzugt basiert die Zwischenschicht (Z) auf Polypropylen, einem Propylen-Copolymerisat (insbesondere einem Propylen-Random-Copolymerisat oder einem Propylen-Block-Copolymerisat) oder deren Mischung.

Die Zwischenschicht (Z) weist vorzugsweise eine Dicke von 50 bis 750 µm auf, bevorzugter 100 bis 500 µm, noch bevorzugter 125 bis 475 µm, am bevorzugtesten 150 bis 450 µm und insbesondere von 175 bis 425 µm.

In einer bevorzugten Ausführungsform der erfindungsgemäßen Mehrschichtfolie basieren die Trägerschicht (T) und die Zwischenschicht (Z) auf demselben Polyolefin, Olefin-Copolymerisat bzw. auf derselben Mischung daraus. Dem Fachmann sind Methoden bekannt, wie zwei benachbarte Schichten, welche dieselbe Polymerzusammensetzung aufweisen, als einzelne, separate Schichten individualisiert werden können. Eine geeignete Methode ist beispielsweise Mikroskopie mit Mikrotomschnitt.

In einer bevorzugten Ausführungsform der erfindungsgemäßen Mehrschichtfolie beträgt die Schichtdicke der Zwischenschicht (Z) wenigstens 10% der Schichtdicke der Trägerschicht (T). Bevorzugter beträgt die Schichtdicke der Zwischenschicht (Z) wenigstens 50% der Schichtdicke der Trägerschicht (T), noch bevorzugter ist die Zwischenschicht (Z) wenigstens so dick wie die Trägerschicht (T). In einer bevorzugten Ausführungsform liegt das Verhältnis der Schichtdicke der Zwischenschicht (Z) zur Schichtdicke der Trägerschicht (T) im Bereich von 0,1:1 bis 20:1, bevorzugter 0,5:1 bis 15:1, noch bevorzugter 1:1 bis 10:1, am bevorzugtesten 1:1 bis 5:1 und insbesondere 1:1 bis 3:1.

Die Verbindungsschicht (V) der erfindungsgemäßen Mehrschichtfolie basiert bevorzugt auf einem Polymer ausgewählt aus der Gruppe bestehend aus Polyamiden (PA), Copolyamiden (CoPA), Polyolefinen (PO), Olefin-Copolymerisaten (CoPO), Polystyrol (PS), Polyethylenterephthalat (amorphes PET oder kristallines PET) oder Polyvinylchlorid (PVC). Besonders bevorzugt basiert die Verbindungsschicht (V) auf einem thermoplastischen Polyolefin, thermoplastischen Olefin-Copolymerisat oder deren Mischung. Insbesondere bevorzugt ist Polypropylen, ein Propylen-Copolymerisat (insbesondere ein Propylen-Random-Copolymerisat oder ein Propylen-Block-Copolymerisat), oder deren Mischung.

Die Verbindungsschicht (V) weist vorzugsweise eine Dicke von 1,0 bis 100 µm auf, bevorzugter 2,0 bis 50 µm, noch bevorzugter 3,0 bis 25 µm, am bevorzugtesten 4,0 bis 20 µm und insbesondere von 5,0 bis 15 µm.

In einer bevorzugten Ausführungsform basieren die Trägerschicht (T), die Zwischenschicht (Z) und auch die Verbindungsschicht (V) gleich oder verschieden auf einem thermoplastischen Polyolefin, einem thermoplastischen Olefin-Copolymerisat oder deren Mischung, besonders bevorzugt auf Polypropylen oder einem Propylen-Copolymerisat. Es wurde überraschend gefunden, dass sich die Thermoformbarkeit der erfindungsgemäßen Mehrschichtfolien über den Schmelzflussindex der Polymere, auf denen die Trägerschicht (T), die Zwischenschicht (Z) und die Verbindungsschicht (V) basiert, in einem breiten Bereich variieren lässt. Auch die Thermoformtemperatur kann auf diese Weise variiert werden. Die Polymere, auf denen die Trägerschicht (T), die Zwischenschicht (Z) und die Verbindungsschicht (V) basieren, können über ihre Schmelzflussrate MFR charakterisiert werden, welche erfindungsgemäß bevorzugt nach DIN ISO 1133 bei 190°C und 2,16 kg gemessen wird. Bevorzugt handelt es sich bei den Polymeren, auf denen die Trägerschicht (T), die Zwischenschicht (Z) und die Verbindungsschicht (V) basieren, um Polymere mit vergleichsweise hoher MFR, d.h. niedriger Viskosität. Bevorzugt basiert die Trägerschicht (T) auf einem Polymer, welches eine niedrigere Schmelzflussrate aufweist als das Polymer, auf welchem die Zwischenschicht (Z) basiert. Besonders bevorzugt verhalten sich die Schmelzflussraten der Polymere, auf denen die Schichten (T), (Z) und (V) basieren, gemäß folgender Abfolge:
- MFR(T) kleiner als MFR(Z) kleiner als MFR(V) oder
- MFR(T) kleiner als MFR(V) kleiner als MFR(Z),
wobei die Schmelzflussraten MFR jeweils bestimmt werden nach DIN ISO 1133 bei 190°C und 2,16 kg.

In einer bevorzugten Ausführungsform liegt das Verhältnis der Schmelzflussrate des Polymers, auf welchem die Trägerschicht (T) basiert (MFR(T)), zu der Schmelzflussrate des Polymers, auf welchem die Zwischenschicht (Z) basiert (MFR(Z)), im Bereich von 1:1,1 bis 1:20, bevorzugter 1:1,2 bis 1:10, noch bevorzugter 1:1,3 bis 1:5, am bevorzugtesten 1:1,4 bis 1:4 und insbesondere 1:1,5 bis 1:3, wobei die Schmelzflussraten MFR jeweils bestimmt werden nach DIN ISO 1133 bei 190°C und 2,16 kg. Es wurde überraschend gefunden, dass die optischen Eigenschaften der erfindungsgemäßen Mehrschichtfolien im Vergleich zu Mehrschichtfolien, welche zwar eine Trägerschicht (T), jedoch keine Zwischenschicht (Z) und keine Verbindungsschicht (V) aufweisen, verbessert sind. Insbesondere wenn die erfindungsgemäßen Mehrschichtfolien transparent sind, wird die Transparenz durch die Thermoformung nicht oder nur unwesentlich negativ beeinflusst (bezogen auf eine konstante Materialstärke, d.h. unter Berücksichtigung der Verdünnung des Verpackungsmaterials im Zuge der Verformung).

Die Barriereschicht (B) der erfindungsgemäßen Mehrschichtfolie ist gas- und/oder aromadicht. Dem Fachmann sind geeignete Verfahren zur Messung der Sauerstoff- bzw. Aromadichtigkeit bekannt. Bevorzugt beträgt die Gasdichtigkeit der erfindungsgemäßen Mehrschichtfolie, bestimmt gemäß DIN 53380, weniger als 5,0, bevorzugter weniger als 4,0 und insbesondere weniger als 2,0 [cm³/m² d bar O₂].

Die Barriereschicht (B) basiert vorzugsweise auf wenigstens einem Polymer ausgewählt aus der Gruppe umfassend Ethylen-Vinylalkohol-Copolymerisat (EVOH), Polyvinylidenchlorid, Vinylidenchlorid-Copolymerisat, Polyester und Polyamid, bevorzugt auf Ethylen-Vinylalkohol-Copolymerisat. Das Ethylen-Vinylalkohol-Copolymerisat wird durch partielle Verseifung eines Ethylen-Vinylacetat-Copolymerisats gewonnen, wobei der Verseifungsgrad bevorzugt zwischen 25 und 50 mol%, bevorzugter zwischen 35 und 45 mol% liegt. Die Barriereschicht (B) sollte sowohl für Sauerstoff als auch für Wasserdampf weitgehend undurchlässig sein. Diese Eigenschaft sollte vorzugsweise auch bei Einsatz der Mehrschichtfolie bei erhöhten Temperaturen aufrecht erhalten bleiben.

Die Barriereschicht (B) weist vorzugsweise eine Dicke von 0,5 bis 50 µm auf, bevorzugter 1,0 bis 20 µm, noch bevorzugter 1,5 bis 15 µm, am bevorzugtesten 2,0 bis 10 µm und insbesondere von 2,5 bis 7,5 µm. In einer bevorzugten Ausführungsform beträgt die Schichtdicke der Barriereschicht (B) maximal 10 µm, bevorzugter maximal 7,5 µm, noch bevorzugter maximal 5,0 µm, am bevorzugtesten maximal 4,0 µm und insbesondere maximal 3,0 µm.

Die ggf. vorhandenen Haftvermittlerschichten (HV-1) und/oder (HV-2) der erfindungsgemäßen Mehrschichtfolie basieren bevorzugt gleich oder verschieden auf einer Mischung aus Polyolefinen und/oder Olefin-Copolymerisat, vorzugsweise ausgewählt aus der Gruppe bestehend aus Polyethylen, wie Polyethylen mit niedriger Dichte (LDPE) oder Polyethylen mit hoher Dichte (HDPE), Polypropylen (PP), Maleinsäureanhydrid-Copolymerisat (MAH-Copolymerisat, aufgepfropft) und/oder Ethylen-Vinylacetat-Copolymerisat. Bevorzugt sind anhydridmodifiziertes Polyethylen, Säurecopolymere des Ethylens, säuremodifiziertes Ethylenvinylacetat, säuremodifiziertes Ethylen(meth)acrylat, anhydridmodifiziertes Ethylen(meth)acrylat, anhydridmodifiziertes Ethylen-Vinylacetat, säure-/acrylatmodifiziertes Ethylenvinylacetat und ein Polymerblend enthaltend mindestens eines der vorstehend genannten Polymere. MAH-Copolymerisate sind besonders bevorzugt.

Die ggf. vorhandenen Haftvermittlerschichten (HV-1) und/oder (HV-2) weisen vorzugsweise dieselbe oder verschiedene Schichtdicken von 1,0 bis 25 µm auf, bevorzugter 1,2 bis 15 µm, noch bevorzugter 1,5 bis 10 µm, am bevorzugtesten 1,8 bis 7,5 µm und insbesondere von 2,0 bis 5,0 µm.

Die ggf. vorhandenen Polyamidschichten (PA-1) und/oder (PA-2) der erfindungsgemäßen Mehrschichtfolie basieren bevorzugt gleich oder verschieden auf einem Polyamid oder Copolyamid, welches aliphatisch oder (teil-)aromatisch sein kann. Bevorzugt ist das Polyamid aliphatisch. In einer bevorzugten Ausführungsform der erfindungsgemäßen Mehrschichtfolie basieren die Polyamidschicht (PA-1) und/oder die Polyamidschicht (PA-2) unabhängig voneinander auf einem Polyamid oder Copolyamid ausgewählt aus der Gruppe bestehend aus PA 4, PA 6, PA 7, PA 8, PA 9, PA 10, PA 11, PA 12, PA 4,2, PA 6,6, PA 6,8, PA 6,9, PA 6,10, PA 6,12, PA 7,7, PA 8,8, PA 9,9, PA 10,9, PA 12,12, PA 6/6,6, PA 6,6/6, PA 6,2/6,2, und PA 6,6/6,9/6. Bevorzugt ist die Zusammensetzung der Polyamidschicht (PA-1) und der Polyamidschicht (PA-2) identisch. PA 6 ist besonders bevorzugt.

Die ggf. vorhandenen Polyamidschichten (PA-1) und/oder (PA-2) weisen bevorzugt dieselbe oder verschiedene Schichtdicken von 1,0 bis 25 µm auf, bevorzugter 1,2 bis 15 µm, noch bevorzugter 1,5 bis 10 µm, am bevorzugtesten 1,8 bis 7,5 µm und insbesondere von 2,0 bis 5,0 µm.

Die Siegelschicht (S) der erfindungsgemäßen Mehrschichtfolie basiert vorzugsweise auf wenigstens einem Polymer ausgewählt aus der Gruppe umfassend Polyolefine, Olefin-Copolymerisate und deren Mischung. Die für die Herstellung der Siegelschicht (S) verwendeten Polymere sind zur Herstellung von Schichten, die mit Lebensmitteln in Kontakt kommen, zugelassen. In einer bevorzugten Ausführung basiert die Siegelschicht (S) auf wenigstens einem Polyolefin ausgewählt aus der Gruppe umfassend m-Polyethylen (m-PE), Polyethylen hoher Dichte (HDPE), Polyethylen niedriger Dichte (LDPE), linearem Polyethylen niedriger Dichte (LLDPE), Acrylsäure-Copolymerisat, insbesondere lonomer (bevorzugt Surlyn^{®}, z.B. zumindest teilweise als Zinksalz), Polypropylen (PP), Propylen-Copolymerisat und deren Mischung. Besonders bevorzugt basiert die Siegelschicht (S) auf m-PE, LDPE oder deren Mischung. Die Siegeltemperaturen liegen vorzugsweise im Bereich von 100°C bis 140°C. Die Schmelztemperatur der Siegelschicht (S) beträgt vorzugsweise 90 bis 140°C, besonders bevorzugt 95°C bis 130°C. Die Siegelschicht (S) kann mit den üblichen Hilfsstoffen wie Antistatika, Gleitmitteln, Antifogmitteln, und/oder Abstandshaltern ausgerüstet werden.

In einer bevorzugten Ausführungsform der erfindungsgemäßen Mehrschichtfolie enthält die Siegelschicht (S) weder ein Additiv mit Antifog-Eigenschaften, noch ist sie auf ihrer freien Oberfläche mit einem Additiv mit Antifog-Eigenschaften beschichtet.

Die Siegelschicht (S) weist vorzugsweise eine Dicke von 1,0 bis 100 µm auf, bevorzugter 2,5 bis 50 µm, noch bevorzugter 5,0 bis 25 µm, am bevorzugtesten 10 bis 20 µm und insbesondere 12,5 bis 17,5 µm.

Besonders bevorzugte Ausführungsformen der erfindungsgemäßen Mehrschichtfolie sind in nachfolgender Tabelle zusammengefasst, wobei die Mehrschichtfolie dabei den Aufbau (T)//(Z)//(V)//(HV-1)//(PA-1)//(B)//(PA-2)//(HV-2)//(S) aufweist:

| Schicht | Zusammensetzung umfassend | Schichtdicke | | |
|---|---|---|---|---|
| | | bevorzugt | bevorzugter | insbesondere |
| (T) | Polypropylen und/oder Propylen-Copolymerisat | 100-800 µm | 140-600 µm | 160-275 µm |
| (Z) | Polypropylen und/oder Propylen-Copolymerisat | 50-750 µm | 125-475 µm | 175-425 µm |

| | | | | |
|---|---|---|---|---|
| (V) | Polypropylen und/oder Propylen-Copolymerisat | 1,0-100 µm | 3,0-25 µm | 5,0-15 µm |
| (HV-1) | geeigneter Haftvermittler | 1,0-25 µm | 1,5-10 µm | 2,0-5,0 µm |
| (PA-1) | Polyamid oder Copolyamid | 1,0-25 µm | 1,5-10 µm | 2,0-5,0 µm |
| (B) | Ethylen-Vinylalkohol-Copolymerisat | 0,5-50 µm | 1,5-15 µm | 2,5-7,5 µm |
| (PA-2) | Polyamid oder Copolyamid | 1,0-25 µm | 1,5-10 µm | 2,0-5,0 µm |
| (HV-2) | geeigneter Haftvermittler | 1,0-25 µm | 1,5-10 µm | 2,0-5,0 µm |
| (S) | Polyethylen und/oder Ethylen-Copolymerisat | 1,0-100 µm | 5,0-25 µm | 12,5-17,5 µm |

Die erfindungsgemäße Mehrschichtfolie kann weitere Schichten basierend auf wenigstens einem Polymer ausgewählt aus der Gruppe umfassend Polyolefine, Olefin-Copolymerisate, Polyester, Polyamide, Polystyrol (PS),
Polyethylenterephthalat (APET oder CPET) oder Polyvinylchlorid aufweisen.

Die erfindungsgemäße Mehrschichtfolie kann bedruckt werden, wobei mindestens eine Schicht der Mehrschichtfolie bedruckt oder durch die Zugabe von Additiven wie organischen oder anorganischen Farbstoffen und Pigmenten eingefärbt werden kann.

In einer bevorzugten Ausführungsform ist die erfindungsgemäße Mehrschichtfolie transparent. Der Begriff "transparent" im Sinne der Erfindung bedeutet, dass ein Verpackungsgut durch die tiefziehfähige Mehrschichtfolie hindurch mit bloßem Auge betrachtet werden kann. Die Transparenz wird bevorzugt mit Hilfe von Densitometern quantifiziert. Derartige Methoden sind dem Fachmann geläufig. Bevorzugt kann als Maß für die Transparenz die Trübung als optischer Wert gemessen werden. Die Messung der Trübung erfolgt bevorzugt nach der ASTM-Prüfnorm D 1003-61 m, Procedure A, nach Eichung des Messgerätes mit Trübungsnormalen zwischen 0,3 und 34% Trübung. Als Messinstrument eignet sich beispielsweise ein Hazemeter der Fa. Byk-Gardner mit Ulbricht-Kugel, das in einem Raumwinkel von 8° bis 160° eine integrierte Messung der diffusen Lichtdurchlässigkeiten gestattet. Die erfindungsgemäßen Mehrschichtfolien weisen nach der Thermoformung bevorzugt eine nach dem vorstehend beschriebenen Verfahren bestimmte Trübung von weniger als 20%, bevorzugter weniger als 18%, noch bevorzugter weniger als 15%, am bevorzugtesten weniger als 10% und insbesondere weniger als 8% auf. Bevorzugt hat die Thermoformung auf die optischen Eigenschaften der erfindungsgemäßen Mehrschichtfolien keinen oder nur geringen Einfluss (bezogen auf Material gleicher Stärke).

Die erfindungsgemäße Mehrschichtfolie ist thermoformbar, vorzugsweise tiefziehfähig. Zur Beurteilung der mechanischen Eigenschaften der erfindungsgemäßen Mehrschichtfolie können beispielsweise Sekantenmodul, 5%-Dehnspannung und Streckspannung (Streckgrenze) mittels Zugversuch nach DIN 53 455 bestimmt werden. In diesem Zusammenhang ist der Sekantenmodul die Steigung der Kraft-Dehnungskurve zwischen 0,05 und 0,25% Dehnung bezogen auf den Einspannquerschnitt, die 5%-Dehnung die Spannung bei 5% Dehnung und die Streckspannung die Zugspannung, bei welcher die Steigung der Kraft-Längenänderungskurve zum ersten Mal gleich null wird. Dabei werden 15 mm breite Proben bei 23°C, 50% relativer Luftfeuchte und einer Prüfgeschwindigkeit von 100 mm/min untersucht.

Bevorzugt beträgt der nach der vorstehend genannten Methode bestimmte Sekantenmodul wenigstens 650 N/mm², bevorzugter wenigstens 700 N/mm², noch bevorzugter wenigstens 720 N/mm², am bevorzugtesten wenigstens 750 N/mm² und insbesondere wenigstens 780 N/mm². In einer bevorzugten Ausführungsform der erfindungsgemäßen Mehrschichtfolie beträgt der Sekantenmodul wenigstens 800 N/mm², bevorzugter wenigstens 900 N/mm², noch bevorzugter wenigstens 1000 N/mm², am bevorzugtesten liegt er im Bereich von 800 bis 1500 N/mm², insbesondere von 1000 bis 1200 N/mm². Besonders bevorzugt beträgt der Sekantenmodul die vorstehend genannten Werte bei einer Temperatur von 100°C. Der Sekantenmodul korreliert mit der Standfestigkeit einer Verpackungsmulde. Bevorzugt kann aus der erfindungsgemäßen Mehrschichtfolie eine Verpackungsmulde tiefgezogen werden, welche im erwärmten Zustand, d.h. bei 100°C, immer noch eine ausreichende mechanische Stabilität aufweist, dass sie bereits im noch erwärmten Zustand eine signifikante Standfestigkeit (ausgedrückt über den Sekantenmodul) aufweist.

Bevorzugt beträgt die nach der vorstehend genannten Methode bestimmte 5%-Dehnspannung zumindest 10 N/mm², bevorzugter zumindest 13 N/mm², noch bevorzugter zumindest 16 N/mm², am bevorzugtesten zumindest 19 N/mm² und insbesondere zumindest 21 N/mm². In einer bevorzugten Ausführungsform der erfindungsgemäßen Mehrschichtfolie beträgt die 5%-Dehnspannung wenigstens 22 N/mm², bevorzugter wenigstens 25 N/mm², noch bevorzugter wenigstens 30 N/mm², am bevorzugtesten liegt sie im Bereich von 25 bis 50 N/mm², insbesondere von 30 bis 40 N/mm².

Bevorzugt ist die nach der vorstehend genannten Methode bestimmte Streckgrenze erreicht bei zumindest 15 N/mm², bevorzugter zumindest 20 N/mm², noch bevorzugter zumindest 22 N/mm², am bevorzugtesten zumindest 24 N/mm² und insbesondere zumindest 26 N/mm². In einer bevorzugten Ausführungsform der erfindungsgemäßen Mehrschichtfolie ist die Streckgrenze erreicht bei zumindest 30 N/mm², bevorzugter zumindest 35 N/mm², noch bevorzugter zumindest 40 N/mm², am bevorzugtesten liegt sie im Bereich von 35 bis 60 N/mm², insbesondere von 40 bis 50 N/mm².

In einer bevorzugten Ausführungsform weist die erfindungsgemäße Mehrschichtfolie einen Zugmodul (*tensile modulus)* auf im Bereich von 1.000 bis 2.500 MPa, bevorzugter 1.050 bis 2.200 MPa, noch bevorzugter 1.100 bis 1.900 MPa, am bevorzugtesten 1.150 bis 1.700 MPa und insbesondere 1.200 bis 1.500 MPa. Der Zugmodul wird bevorzugt nach der ASTM Prüfnorm D638 (ISO 527) bestimmt.

In bevorzugten Ausführungsformen 1-5 weist die erfindungsgemäße Folie, vorzugsweise sowohl in Längs- als auch in Querrichtung, einen oder mehrere der folgenden, durch Zugversuch gemäß DIN EN ISO 527-3 gemessenen Parameter, vorzugsweise zumindest einen Sekantenmodul Es, innerhalb einem der nachfolgend aufgeführten Wertebereiche auf (Mittelwert über drei Messungen; Kraftaufnehmer Fₘₐₓ: 2,5 kN; Wegaufnehmer: Traverse; Einspannlänge: 100 mm; a₀: im Bereich von 0,018-0,068 mm; b₀: 15 mm; S₀: im Bereich von 0,27-1,02 mm²; Vorkraft: 0,1 MPa; Prüfgeschwindigkeit 500 mm/min; Beginn E-Modulermittlung: 0,25%; Ende E-Modulermittlung: 1,5%):

| Parameter | 1 | 2 | 3 | 4 | 5 |
|---|---|---|---|---|---|
| E_{S} [N/mm²] | 650 - 1600 | 750 - 1300 | 860 - 1060 | 880 - 1030 | 900 - 1000 |
| σ_{Y} [MPa] | 150 - 350 | 170 - 300 | 190 - 280 | 210 - 260 | 220 - 250 |
| ε_{Y} [%] | 5,0 - 15 | 6,5 - 13 | 7,9 - 11,5 | 8,5 - 10,5 | 9,0 - 10 |
| σ_{M} [MPa] | 240 - 410 | 260 - 390 | 280 - 370 | 290 - 360 | 300 - 350 |
| ε_{M} [%] | 480 - 750 | 500 - 720 | 520 - 700 | 540 - 680 | 560 - 660 |
| σ_{B} [MPa] | 90 - 400 | 100 - 380 | 110 - 370 | 130-350 | 150 - 300 |
| ε_{B} [%] | 350 - 800 | 400 - 750 | 450 - 700 | 500 - 650 | 550 - 600 |

| | | | | | |
|---|---|---|---|---|---|
| E_{S} Sekantenmodul gemäß DIN EN ISO 527-3 σ_{Y}/ε_{Y} Spannung/Dehnung im linearen Bereich gemäß DIN EN ISO 527-3 σ_{M}/ε_{M} Spannung/Dehnung im max. Bereich gemäß DIN EN ISO 527-3 σ_{B}/ε_{B} Spannung/Dehnung beim Bruch gemäß DIN EN ISO 527-3 | | | | | |

Bevorzugt liegt zumindest eines der Parameterpaare σ_{Y}/ε_{Y}, σ_{M}/ε_{M} oder σ_{B}/ε_{B} innerhalb der genannten Wertebereiche. Besonders bevorzugt liegen alle Parameter innerhalb der genannten Wertebereiche.

Bevorzugt ist die erfindungsgemäße Mehrschichtfolie dazu geeignet, um ein Tiefziehverhältnis von 1:2, bevorzugter 1:2,5, noch bevorzugter 1:3, noch bevorzugter 1:3,5, am bevorzugtesten 1:4 und insbesondere 1:4,5 tiefgezogen zu werden. Dem Fachmann ist bekannt, dass die individuelle Schichtdicke der Mehrschichtfolie an das beabsichtigte Tiefziehverhältnis angepasst werden kann, damit auch in den tiefgezogenen Bereichen nachher eine noch ausreichende Materialstärke vorhanden ist.

Grundsätzlich kann die erfindungsgemäße Mehrschichtfolie unabhängig in einer oder mehreren Schichten zusätzlich übliche Zusatz- oder Hilfsstoffe enthalten. Zur Variation der Gleiteigenschaften der Mehrschichtfolie kann mindestens eine Schicht Gleitmittel enthalten. Die Gleitmittel sollten dabei vorzugsweise in der Trägerschicht (T) und/oder der Siegelschicht (S) enthalten sein, können jedoch zusätzlich auch in zumindest einer der Zwischenschichten enthalten sein. Ferner kann die Mehrschichtfolie in einer oder mehreren Schichten übliche Stabilisatoren, Antioxidantien, Weichmacher, Processing-Aid, UV-Absorber, Füllmittel, Anti-Flammmittel, Antistatika, etc. enthalten. Derartige Stoffe sind dem Fachmann bekannt.

Ein weiterer Gegenstand der Erfindung betrifft ein Verfahren zur Herstellung der vorstehend beschriebenen thermoformbaren Mehrschichtfolien.

Die Herstellung der erfindungsgemäßen Mehrschichtfolie kann als Teilschritt ein Blas-, Flach-Folien-, Beschichtungs-, Extrusions-, Coextrusions- oder entsprechendes Beschichtungs- oder Kaschierverfahren umfassen. Auch Kombinationen dieser Verfahren sind möglich.

Die einzelnen Schichten der erfindungsgemäßen Mehrschichtfolien werden vorzugsweise weder rein sequentiell, noch in einem einzigen Schritt zusammengefügt. Insbesondere bevorzugt werden die einzelnen Schichten der erfindungsgemäßen Mehrschichtfolie nicht in einem einzigen Coextrusions-Schritt zusammengefügt.

Erfindungsgemäß bevorzugt erfolgt die Herstellung der Mehrschichtfolien durch ein konsekutives Verfahren, bei dem zunächst ein Mehrschichtenfilm hergestellt wird, welcher nur einen Teil der Schichten der erfindungsgemäßen Mehrschichtfolie umfasst. Bevorzugt umfasst dieser Mehrschichtenfilm
- die Verbindungsschicht (V),
- die Haftvermittlerschicht (HV-1) und/oder die Polyamidschicht (PA-1),
- die Barriereschicht (B),
- die Polyamidschicht (PA-2) und/oder die Haftvermittlerschicht (HV-2), und
- die Siegelschicht (S),
   jedoch
- weder die Trägerschicht (T),
- noch die Zwischenschicht (Z).

Der vorstehend genannte Mehrschichtenfilm wird vorzugsweise durch übliche Flachfolien-Coextrusion oder durch Folienblas-Coextrusion, wie z.B. in der US 3,456,044 beschrieben, hergestellt. Derartige Verfahren sind dem Fachmann bekannt. In diesem Zusammenhang kann beispielsweise auf A.L. Brody, K.S. Marsh, The Wiley Encyclopedia of Packaging Technology, Wiley-Interscience, 2 edition (1997); W. Soroka, Fumdamentals of Packaging Technology, Institute of Packaging Professionals (1995); J. Nentwig, Kunsfstoff-Folien, Hanser Fachbuch (2000); und S.E.M. Selke, Understanding Plastics Packaging Technology (Hanser Understanding Books), Hanser Gardner Publications (1997) verwiesen werden. Es kommen bekannte, nach dem Stand der Technik übliche Herstellungsanlagen in Betracht. Im Fall der Flachfolien-Coextrusion werden bevorzugt Anlagen mit rascher Abkühlungsmöglichkeit, wie große Kühlwalzen, eingesetzt.

Der so hergestellte Mehrschichtenfilm wird dann erfindungsgemäß im Wege der Extrusionslaminierung mit der Trägerschicht (T) durch Extrusion der Zwischenschicht (Z) verbunden.

Demnach betrifft ein Aspekt der Erfindung ein Verfahren zur Herstellung einer vorstehend beschriebenen Mehrschichtfolie, umfassend die Schritte
(a) Zusammenführen der Trägerschicht (T) mit einem Mehrschichtenfilm umfassend
   - die Verbindungsschicht (V),
   - die Haftvermittlerschicht (HV-1) und/oder die Polyamidschicht (PA-1),
   - die Barriereschicht (B),
   - die Polyamidschicht (PA-2) und/oder die Haftvermittlerschicht (HV-2), und
   - die Siegelschicht (S); und
(b) Extrudieren der Zwischenschicht (Z) zwischen die Trägerschicht (T) und den Mehrschichtenfilm.

Bevorzugt hat der Mehrschichtenfilm dabei eine der folgenden Schichtabfolgen:
- (V)//(HV-1)//(B)//(HV-2)//(S),
   (V)//(PA-1)//(B)//(PA-2)//(S),
   (V)//(PA-1)//(B)/l(HV-2)//(S),
   (V)//(HV-1)//(B)//(PA-2)//(S);
- (V)//(HV-1)//(PA-1)//(B)//(HV-2)//(S),
   (V)//(HV-1)//(PA-1)//(B)//(PA-2)//(S),
   (V)//(HV-1)//(B)//(PA-2)//(HV-2)//(S),
   (V)//(PA-1)//(B)//(PA-2)//(HV-2)//(S); oder
- (V)//(HV-1)//(PA-1)//(B)//(PA-2)//(HV-2)//(S).

Der Mehrschichtenfilm wird in Schritt (a) bevorzugt derart mit der Trägerschicht (T) zusammengeführt, dass die Verbindungsschicht (V) der Trägerschicht zugewandt ist, damit durch Schritt (b) die Zwischenschicht (Z) in der Schichtabfolge des hergestellten Laminats zwischen der Trägerschicht (T) und der Verbindungsschicht (V) angeordnet wird. Auf diese Weise kommt die Siegelschicht (S) auf einer der beiden Außenseiten des Laminats zu liegen.

Die Extrusionstemperatur bei Schritt (b) liegt bevorzugt im Bereich von 150 bis 300°C, wobei der Fachmann durch Routineversuche bzw. gemäß Herstellerspezifikation je nach Zusammensetzung des die Zwischenschicht (Z) bildenden Polymers oder Polymerblends die optimale Extrusionstemperatur einstellen kann.

Um dem so entstandenen Laminat aus Trägerschicht (T), Zwischenschicht (Z) und Mehrschichtenfilm eine ausreichende mechanische Festigkeit zu verleihen, umfasst das erfindungsgemäße Verfahren bevorzugt den Schritt
(c) Ausüben eines genügend großen Drucks auf das durch Schritte (a) und (b) hergestellte Laminat, damit die Trägerschicht (T) und der Mehrschichtenfilm ausreichend miteinander verbunden werden.

Die zum Schichtaufbau der Mehrschichtfolie eingesetzten Polymere sind kommerziell erhältlich und im Stand der Technik ausreichend beschrieben. Sie werden üblicherweise zur Herstellung der erfindungsgemäßen Mehrschichtfolien als Pellets oder Granulate, soweit notwendig in üblichen Mischapparaturen gemischt, und durch Schmelzen vorzugsweise mit Hilfe von Extrudern weiterverarbeitet.

Die erfindungsgemäße Mehrschichtfolie eignet sich hervorragend zum Verpacken von Gütern, vorzugsweise von Lebensmitteln, besonders bevorzugt von verderblichen Lebensmitteln. Die Mehrschichtfolie kann dabei sowohl für Heißabfüllungen als auch für die Erhitzung von Füllgut in der Mehrschichtfolie bis hin zur Sterilisation eingesetzt werden. Die Mehrschichtfolie ist geeignet für die Verpackung von Lebensmitteln wie Fleisch, Fisch, Gemüse, Obst, Milchprodukten, Räucherwaren, Fertiggerichten, Getreide, Cerealien, Brot- und Backwaren, aber auch von anderen Gütern, wie z.B. medizinischen Produkten.

Ein weiterer Gegenstand der Erfindung betrifft daher die Verwendung einer vorstehend beschriebenen Mehrschichtfolie zur Herstellung einer Verpackung, vorzugsweise einer Verpackung für ein Lebensmittel.

Ein weiterer Gegenstand der Erfindung betrifft eine Verpackung aus der erfindungsgemäßen Mehrschichtfolie, vorzugsweise für Lebensmittel, besonders bevorzugt für verderbliche Lebensmittel. Die erfindungsgemäße Verpackung umfasst zwei Verpackungselemente, von denen wenigstens ein Verpackungselement eine vorstehend beschriebene Mehrschichtfolie ist, welche thermogeformt wurde.

Bevorzugt weist das erste Verpackungselement eine Mulde auf, welche durch Tiefziehen geformt wurde, wodurch zwischen dem ersten und dem zweiten Verpackungselement ein Hohlraum gebildet wird, wobei das erste und das zweite Verpackungselement randseitig miteinander versiegelt sind.

In einer bevorzugten Ausführungsform umfasst das zweite Verpackungselement eine Mehrschichtfolie mit einer Gesamtschichtdicke von weniger als 250 µm, bevorzugter weniger als 200 µm, noch bevorzugter weniger als 100 µm, am bevorzugtesten weniger als 75 µm und insbesondere weniger als 50 µm. Diese vom zweiten Verpackungselement umfasste Mehrschichtfolie ist bevorzugt nicht tiefziehfähig.

Bevorzugt sind beide Verpackungselemente transparent.

Die folgenden Beispiele dienen zur Illustration der Erfindung, sind jedoch nicht einschränkend auszulegen.

### Beispiel 1:

Es wurde folgende Mehrschichtfolie hergestellt:

| Typ | Dicke | Polymer |
|---|---|---|
| (T) | 250 µm | Polypropylen |
| (Z) | 200 µm | Propylen-Copolymerisat |
| (V) | 9 µm | Propylen-Copolymerisat |
| (HV-1) | 3 µm | Olefin-Copolymerisat mit aufgepfropftem Maleinsäureanhydrid |
| (PA-1) | 4 µm | Polyamid 6 |
| (B) | 5 µm | Ethylen-Vinylalkohol-Copolymerisat (38 mol% EVOH) |
| (PA-2) | 4 µm | Polyamid 6 |
| (HV-2) | 3 µm | Olefin-Copolymerisat mit aufgepfropftem Maleinsäureanhydrid |
| (S) | 15 µm | LDPE mit 2 Gew.% Anti-Blockmittel, 1 Gew.-% weitere Hilfsstoffe |

Dazu wurde zunächst ein Mehrschichtenfilm aus der Verbindungsschicht (V), der Haftvermittlerschicht (HV-1), der Polyamidschicht (PA-1),der Barriereschicht (B), der Polyamidschicht (PA-2), der Haftvermittlerschicht (HV-2) und der Siegelschicht (S) durch Coextrusion hergestellt. Die Gesamtschichtdicke dieses Mehrschichtenfilms betrug 43 µm, so dass die Schichtdicke der Barriereschicht (B) bezogen auf die Gesamtschichtdicke des Mehrschichtenfilms 11,6% betrug.

Anschließend wurde die vorgefertigte Trägerschicht (T) durch Extrusionslaminierung, d.h. durch Extrusion der Zwischenschicht (Z) mit dem Mehrschichtenfilm verbunden und das so hergestellte Laminat gewalzt.

Man erhielt eine Mehrschichtfolie der oben genannten Zusammensetzung, wobei die Schichtdicke der Barriereschicht (B) bezogen auf die Gesamtschichtdicke der Mehrschichtfolie 1,0% betrug.

### Beispiele 2 bis 7:

Analog zu Beispiel 1 wurden folgende Mehrschichtfolien hergestellt:

| Beispiel | Schichtdicken [µm] | | | | | | Zusammensetzung |
|---|---|---|---|---|---|---|---|
| | 2 | 3 | 4 | 5 | 6 | 7 | |
| (T) | 250 | 250 | 250 | 250 | 180 | 180 | Polypropylen |
| (Z) | 400 | 382 | 272 | 197 | 177 | 102 | Propylen-Copolymerisat |
| (V) | 9 | 9 | 9 | 9 | 9 | 9 | Propylen-Copolymerisat |
| (HV-1) | 3 | 3 | 3 | 3 | 3 | 3 | Olefin-Copolymerisat mit aufgepfropftem Maleinsäureanhydrid |
| (PA-1) | 4 | 4 | 4 | 4 | 4 | 4 | Polyamid 6 |
| (B) | 5 | 5 | 5 | 5 | 5 | 5 | Ethylen-Vinylalkohol-Copolymerisat (38 mol% EVOH) |
| (PA-2) | 4 | 4 | 4 | 4 | 4 | 4 | Polyamid 6 |
| (HV-2) | 3 | 3 | 3 | 3 | 3 | 3 | Olefin-Copolymerisat mit aufgepfropftem Maleinsäureanhydrid |
| (S) | 15 | 15 | 15 | 15 | 15 | 15 | LDPE, 2 Gew.-% Anti-Blockmit-tel, 1 Gew.-% weitere Hilfsstoffe |
| ∑ | 693 | 675 | 565 | 490 | 400 | 325 | |
| (B) [%] | 0,72 | 0,74 | 0,88 | 1,02 | 1,25 | 1,54 | |
| Es quer [N/mm²] | - | 1033 | 970 | 962 | 987 | 868 | |
| Eₛ längs [N/mm²] | - | 1050 | 954 | 972 | 1016 | 896 | |

Der prozentuale Anteil der Schichtdicke der Barriereschicht (B) an der Gesamtschichtdicke (∑) ist in vorstehender Tabelle als "(B) [%]" angegeben. Für Beispiele 3 bis 7 ist darüber hinaus der Sekantenmodul in Quer- und in Längsrichtung, bestimmt gemäß DIN EN ISO 527-3 angegeben (Mittelwert über drei Messungen; Kraftaufnehmer Fₘₐₓ: 2,5 kN; Wegaufnehmer: Traverse; Einspannlänge: 100 mm; a₀: im Bereich von 0,018-0,068 mm; b₀: 15 mm; S₀: im Bereich von 0,27-1,02 mm²; Vorkraft: 0,1 MPa; Prüfgeschwindigkeit 500 mm/min; Beginn E-Modulermittlung: 0,25%; Ende E-Modulermittlung: 1,5%).

## Patentansprüche

1. Thermoformbare Mehrschichtfolie umfassend
- eine Trägerschicht (T) basierend auf einem thermoplastischen Polyolefin, thermoplastischen Olefin-Copolymerisat oder deren Mischung,
- eine Zwischenschicht (Z) basierend auf einem thermoplastischen Polyolefin, thermoplastischen Olefin-Copolymerisat oder deren Mischung,
- eine Verbindungsschicht (V),
- eine Haftvermittlerschicht (HV-1) und/oder eine Polyamidschicht (PA-1),
- eine gas- und/oder aromadichte Barriereschicht (B),
- eine Polyamidschicht (PA-2) und/oder eine Haftvermittlerschicht (HV-2), und
- eine Siegelschicht (S),
wobei die Schichtdicke der Barriereschicht (B) weniger als 3,0% der Gesamtschichtdicke der Mehrschichtfolie beträgt..

2. Mehrschichtfolie nach Anspruch 1, **dadurch gekennzeichnet, dass** die Schichtdicke der Zwischenschicht (Z) wenigstens 10% der Schichtdicke der Trägerschicht (T) beträgt.

3. Mehrschichtfolie nach Anspruch 2, **dadurch gekennzeichnet, dass** das Verhältnis der Schichtdicke der Zwischenschicht (Z) zur Schichtdicke der Trägerschicht (T) im Bereich von 0,1:1 bis 20:1 liegt.

4. Mehrschichtfolie nach einem der vorstehenden Ansprüche, **dadurch gekennzeichnet, dass** die Schichtdicke der Zwischenschicht (Z) im Bereich von 50 bis 750 µm liegt.

5. Mehrschichtfolie nach einem der vorstehenden Ansprüche, **dadurch gekennzeichnet, dass** die Trägerschicht (T) und die Zwischenschicht (Z) gleich oder verschieden auf Polypropylen, Propylen-Copolymerisat oder deren Mischung basieren.

6. Mehrschichtfolie nach einem der vorstehenden Ansprüche, **dadurch gekennzeichnet, dass** sich die Schmelzflussraten MFR der Polymere, auf denen die Trägerschicht (T), die Zwischenschicht (Z) und die Verbindungsschicht (V) basieren, bestimmt nach DIN ISO 1133 bei 190°C und 2,16 kg, gemäß folgender Abfolge verhalten:
- MFR (T) < MFR (Z) < MFR (V), oder
- MFR (T) < MFR (V) < MFR (Z).

7. Mehrschichtfolie nach einem der vorstehenden Ansprüche, **dadurch gekennzeichnet, dass** die Barriereschicht (B) auf Ethylen-Vinylalkohol-Copolymerisat oder Polyvinylidenchlorid basiert.

8. Mehrschichtfolie nach einem der vorstehenden Ansprüche, **dadurch gekennzeichnet, dass** die Schichtdicke der Barriereschicht (B) maximal 10 µm beträgt.

9. Mehrschichtfolie nach einem der vorstehenden Ansprüche, **dadurch gekennzeichnet, dass** die Verbindungsschicht (V) auf einem thermoplastischen Polyolefin, thermoplastischen Olefin-Copolymerisat oder deren Mischung basiert.

10. Mehrschichtfolie nach einem der vorstehenden Ansprüche, **dadurch gekennzeichnet, dass** sie transparent ist.

11. Mehrschichtfolie nach einem der vorstehenden Ansprüche, **dadurch gekennzeichnet, dass** ihr Sekantenmodul, bestimmt gemäß DIN EN ISO 527-3, wenigstens 650 N/mm² beträgt.

12. Verfahren zur Herstellung einer Mehrschichtfolie nach einem der Ansprüche 1 bis 11, umfassend die Schritte
(a) Zusammenführen der Trägerschicht (T) mit einem Mehrschichtenfilm umfassend
- die Verbindungsschicht (V),
- die Haftvermittlerschicht (HV-1) und/oder die Polyamidschicht (PA-1),
- die Barriereschicht (B),
- die Polyamidschicht (PA-2) und/oder die Haftvermittlerschicht (HV-2), und
- die Siegelschicht (S); und
(b) Extrudieren der Zwischenschicht (Z) zwischen die Trägerschicht (T) und den Mehrschichtenfilm.

13. Verfahren nach Anspruch 12, **dadurch gekennzeichnet, dass** es den Schritt umfasst
(c) Ausüben eines genügend großen Drucks auf das durch Schritte (a) und (b) hergestellte Laminat, damit die Trägerschicht (T) und der Mehrschichtenfilm ausreichend miteinander verbunden werden.

14. Verwendung einer Mehrschichtfolie nach einem der Ansprüche 1 bis 11 zur Herstellung einer Verpackung.

15. Verwendung nach Anspruch 14, **dadurch gekennzeichnet, dass** die Verpackung für ein Lebensmittel ist.

16. Verpackung umfassend eine tiefgezogene Mehrschichtfolie nach einem der Ansprüche 1 bis 11 ist.

17. Verpackung nach Anspruch 16, **dadurch gekennzeichnet, dass** sie neben der tiefgezogenen Mehrschichtfolie ein weiteres Verpackungselement umfasst, wobei sowohl die tiefgezogene Mehrschichtfolie als auch das weitere Verpackungselement transparent sind.

## Claims

1. Thermoformable multilayer film comprising
- a backing layer (T) based on a thermoplastic polyolefin, thermoplastic olefin copolymer or mixture of these,
- an intermediate layer (Z) based on a thermoplastic polyolefin, thermoplastic olefin copolymer or mixture of these,
- a bonding layer (V),
- an adhesion-promoter layer (HV-1) and/or a polyamide layer (PA-1),
- a gas-tight and/or odour-proof barrier layer (B),
- a polyamide layer (PA-2) and/or an adhesion-promoter layer (HV-2), and
- a sealable layer (S),
where the thickness of the barrier layer (B) is less than 3.0% of the total thickness of the multilayer film.

2. Multilayer film according to Claim 1, **characterized in that** the thickness of the intermediate layer (Z) is at least 10% of the thickness of the backing layer (T).

3. Multilayer film according to Claim 2, **characterized in that** the ratio of the thickness of the intermediate layer (Z) to the thickness of the backing layer (T) is in the range from 0.1:1 to 20:1.

4. Multilayer film according to any of the preceding claims, **characterized in that** the thickness of the intermediate layer (Z) is in the range from 50 to 750 µm.

5. Multilayer film according to any of the preceding claims, **characterized in that** the backing layer (T) and the intermediate layer (Z) are identically or differently based on polypropylene, propylene copolymer or a mixture of these.

6. Multilayer film according to any of the preceding claims, **characterized in that** the relation between the melt flow rates MFR of the polymers on which the backing layer (T), the intermediate layer (Z) and the bonding layer (V) are based, determined in accordance with DIN ISO 1133 for 190°C and 2.16 kg, is in accordance with the following sequence:
- MFR (T) < MFR (Z) < MFR (V), or
- MFR (T) < MFR (V) < MFR (Z).

7. Multilayer film according to any of the preceding claims, **characterized in that** the barrier layer (B) is based on ethylene-vinyl alcohol copolymer or polyvinylidene chloride.

8. Multilayer film according to any of the preceding claims, **characterized in that** the thickness of the barrier layer (B) is at most 10 µm.

9. Multilayer film according to any of the preceding claims, **characterized in that** the bonding layer (V) is based on a thermoplastic polyolefin, thermoplastic olefin copolymer or mixture of these.

10. Multilayer film according to any of the preceding claims, **characterized in that** it is transparent.

11. Multilayer film according to any of the preceding claims, **characterized in that** its secant modulus, determined in accordance with DIN EN ISO 527-3, is at least 650 N/mm².

12. Process for the production of a multilayer film according to any of Claims 1 to 11, comprising the following steps:
(a) bringing the backing layer (T) together with a multilayer structure comprising
- the bonding layer (V),
- the adhesion-promoter layer (HV-1) and/or the polyamide layer (PA-1),
- the barrier layer (B),
- the polyamide layer (PA-2) and/or the adhesion-promoter layer (HV-2), and
- the sealable layer (S); and
(b) extruding of the intermediate layer (Z) between the backing layer (T) and the multilayer structure.

13. Process according to Claim 12, **characterized in that** it comprises the following step:
(c) exerting a sufficiently great pressure onto the laminate produced via steps (a) and (b) for binding the backing layer (T) and the multilayer structure to one another sufficiently.

14. Use of a multilayer film according to any of Claims 1 to 11 for the production of packaging.

15. Use according to Claim 14, **characterized in that** the packaging is used for food or drink.

16. Packaging comprising a deep-draw-thermoformed multilayer film according to any of Claims 1 to 11.

17. Packaging according to Claim 16, **characterized in that** it comprises, alongside the deep-draw-thermoformed multilayer film, another packaging element, where both the deep-draw-thermoformed multilayer film and the other packaging element are transparent.

## Revendications

1. Feuille multicouche thermoformable, comprenant
- une couche support (T) à base d'une polyoléfine thermoplastique, d'un copolymère d'oléfine thermoplastique ou de leur mélange,
- une couche intermédiaire (Z) à base d'une polyoléfine thermoplastique, d'un copolymère d'oléfine thermoplastique ou de leur mélange,
- une couche d'assemblage (V),
- une couche de promoteur d'adhérence (HV-1) et/ou une couche de polyamide (PA-1),
- une couche formant une barrière, imperméable aux gaz et/ou aux arômes (B),
- une couche de polyamide (PA-2) et/ou une couche de promoteur d'adhérence (HV-2), et
- une couche de scellage (S),
l'épaisseur de la couche formant une barrière (B) étant inférieure à 3,0% de l'épaisseur de couche totale de la feuille multicouche.

2. Feuille multicouche selon la revendication 1, **caractérisée en ce que** l'épaisseur de la couche intermédiaire (Z) représente au moins 10% de l'épaisseur de la couche support (T).

3. Feuille multicouche selon la revendication 2, **caractérisée en ce que** le rapport de l'épaisseur de la couche intermédiaire (Z) à l'épaisseur de la couche support (T) se situe dans la plage de 0,1:1 à 20:1.

4. Feuille multicouche selon l'une quelconque des revendications précédentes, **caractérisée en ce que** l'épaisseur de la couche intermédiaire (Z) se situe dans la plage de 50 à 750 µm.

5. Feuille multicouche selon l'une quelconque des revendications précédentes, **caractérisée en ce que** la couche support (T) et la couche intermédiaire (Z) sont, de manière identique ou différente, à base de polypropylène, de copolymère de propylène ou de leur mélange.

6. Feuille multicouche selon l'une quelconque des revendications précédentes, **caractérisée en ce que** les indices de fluidité à chaud MFR des polymères sur lesquels la couche support (T), la couche intermédiaire (Z) et la couche d'assemblage (V) sont basées, déterminés selon les normes DIN ISO 1133 à 190°C et à 2,16 kg, se comportent selon la succession suivante :
- MFR (T) < MFR (Z) < MFR (V), ou
- MFR (T) < MFR (V) < MFR (Z).

7. Feuille multicouche selon l'une quelconque des revendications précédentes, **caractérisée en ce que** la couche formant une barrière (B) est à base de copolymère d'éthylène-alcool vinylique ou de poly(chlorure de vinylidène).

8. Feuille multicouche selon l'une quelconque des revendications précédentes, **caractérisée en ce que** l'épaisseur de la couche formant une barrière (B) est d'au maximum 10 µm.

9. Feuille multicouche selon l'une quelconque des revendications précédentes, **caractérisée en ce que** la couche d'assemblage (V) est à base d'une polyoléfine thermoplastique, d'un copolymère d'oléfine thermoplastique ou de leur mélange.

10. Feuille multicouche selon l'une quelconque des revendications précédentes, **caractérisée en ce qu'**elle est transparente.

11. Feuille multicouche selon l'une quelconque des revendications précédentes, **caractérisée en ce que** son module sécant, déterminé selon la norme DIN EN ISO 527-3, vaut au moins 650 N/mm².

12. Procédé pour la production d'une feuille multicouche selon l'une quelconque des revendications 1 à 11, comprenant les étapes :
(a) réunion de la couche support (T) avec un film multicouche, comprenant
- la couche d'assemblage (V),
- la couche de promoteur d'adhérence (HV-1) et/ou la couche de polyamide (PA-1),
- la couche formant une barrière (B),
- la couche de polyamide (PA-2) et/ou la couche de promoteur d'adhérence (HV-2), et
- la couche de scellage (S), et
(b) extrusion de la couche intermédiaire (Z) entre la couche support (T) et le film multicouche.

13. Procédé selon la revendication 12, **caractérisé en ce qu'**il comprend l'étape
(c) consistant à exercer une pression suffisamment grande sur le stratifié produit par les étapes (a) et (b) afin que la couche support (T) et le film multicouche soient assemblés suffisamment l'un avec l'autre.

14. Utilisation d'une feuille multicouche selon l'une quelconque des revendications 1 à 11 pour la fabrication d'un emballage.

15. Utilisation selon la revendication 14, **caractérisée en ce que** l'emballage est destiné à un aliment.

16. Emballage comprenant une feuille multicouche emboutie selon l'une quelconque des revendications 1 à 11.

17. Emballage selon la revendication 16, **caractérisé en ce qu'**il comprend, outre la feuille multicouche emboutie, un autre élément d'emballage, tant la feuille multicouche emboutie que l'autre élément d'emballage étant transparents.
